**Europäisches Patentamt**

**European Patent Office**

**Office européen des brevets**

(19)

(11) Veröffentlichungsnummer: **0 109 388**
**B1**

(12) **EUROPÄISCHE PATENTSCHRIFT**

(45) Veröffentlichungstag der Patentschrift:
**13.05.87**

(51) Int. Cl.⁴: **B 32 B 3/12,** B 29 C 47/00

(21) Anmeldenummer: **83890202.1**

(22) Anmeldetag: **09.11.83**

(54) Verbundplatte.

(30) Priorität: **10.11.82 AT 4092/82**

(43) Veröffentlichungstag der Anmeldung:
**23.05.84 Patentblatt 84/21**

(45) Bekanntmachung des Hinweises auf die Patenterteilung:
**13.05.87 Patentblatt 87/20**

(84) Benannte Vertragsstaaten:
**AT BE CH DE FR GB IT LI LU NL SE**

(56) Entgegenhaltungen:
**DE - A - 1 609 777**
**GB - A - 1 042 732**
**GB - A - 1 174 287**
**GB - A - 2 041 292**

(73) Patentinhaber: **General Electric Plastics Structured Products Europe B.V., Plasticslaan 1, P.B. 117, NL-4600 AC Bergen op Zoom (NL)**

(72) Erfinder: **Hirsch, Elisabeth, Pleyergasse 6, A-2700 Wr. Neustad (AT)**

(74) Vertreter: **Gibler, Ferdinand, Dipl.Ing.Dr.tech., Dorotheergasse 7/14, A-1010 Wien (AT)**

## Beschreibung

Die vorliegende Erfindung betrifft eine Verbundplatte, die eine Stegplatte aus Polycarbonat enthält, bei welcher mindestens zwei durchgehende Platten unter Bildung von Hohlräumen durch Stege miteinander verbunden sind, wobei auf mindestens einer ihrer beiden Seiten eine haftvermittelnde Ausgleichsschicht und auf dieser eine oberste Schicht aus einem vom Material der Stegplatte unterschiedlichen Kunststoff angeordnet ist. Eine solche Verbundplatte ist z.B. aus der GB-A 2 041 292 bekannt.

Stegplatten aus Kunststoff sind im übrigen für die verschiedensten Verwendungszwecke bereits bekannt. Dabei wurde für die zwischen den Platten angeordneten Stege eine Ausrichtung unter 90° oder aber unter einer von 90° verschiedenen Richtung in bezug auf die Platten vorgeschlagen. Ausserdem sind Stegdoppelplatten ebenso wie Stegmehrfachplatten, d.h. solche, bei denen mehrere Platten durch Stege miteinander verbunden sind, bekannt. In der Regel werden diese Stegplatten durch Extrusion von thermoplastischem Material hergestellt, prinzipiell ist aber auch die Herstellung aus Duroplasten möglich, wenn die Formen nach dem Einspritzen während der für die Aushärung nötigen Zeit geheizt bleiben müssen.

Es ist auch bekannt, derartige Kunststoffstegplatten mit einer Glasschicht zu einer Art Verbundglas zu kombinieren. Gegenstand der vorliegenden Erfindung ist eine Verbundplatte der eingangs genannten Art, die dadurch gekennzeichnet ist, dass die oberste Schicht (Verfestigungsschicht) aus einem Kunststoff mit im Vergleich zur Stegplatte grösserer Oberflächenhärte gebildet ist und eine UV-Stabilität aufweist.

Es ist ein Ziel der vorliegenden Erfindung, insbesondere Abdeckplatten für Glashäuser, Glasdächer, Glaskuppeln u.dgl. zur Verfügung zu stellen, wobei die Stegplarren aus durchsichtigem bzw. durchscheinendem Kunststoffmaterial bestehen. Erfindungsgemäss soll bei derartigen Verbundplatten das Material der Verfestigungsschicht eine grössere Oberflächenhärte als das Stegplattenmaterial selbst aufweisen. Erfindungsgemäss, besitzt die Verfestigungsschicht eine besonders hohe UV-Stabilität, um ein Verfärben der Abdeckungen nach längerem Lichteinfall hintanzuhalten. Dadurch werden die bekannten aus Polycarbonat-Stegplatten bestehenden Glashausabdeckungen deutlich verbessert. Platten dieser Art werden am besten durch Koextrusion der Stegplatte mit der Verfestigungsschicht und der vorgesehenen Ausgleichsschicht hergestellt.

Nach einer besonderen Ausführungsform der vorliegenden Erfindung besteht eine Verbundplatte für den oben genannten Zweck aus einer Stegplatte aus Polycarbonat, einer Verfestigungsschicht aus einem Poly(meth)acrylat und einer Ausgleichsschicht aus Polyäthylen.

Die Acrylpolymerschicht gewährleistet die höhere Kratzfestigkeit der Oberfläche gleichzeitig mit einer erhöhten UV-Stabilität der Oberflächenschicht. Das «Altern» der bekannten Polycarbonat-Stegplatten wird dadurch vermieden.

Bei der Herstellung von Glashausabdeckungen u.dgl. wird man natürlich die Hohlräume zwischen den Stegen der Stegplatten nicht ausschäumen, um die Lichtdurchlässigkeit nicht negativ zu beeinflussen.

Zur Herstellung gewölbter Dachteile, wie insbesondere für Glaskuppeln u.dgl. können diese Verbundplatten, da die Stegplatten aus einem verformbaren Thermoplast bestehen, in der Wärme in die gewünschte Form gebracht werden.

Bei der Verwendung derartiger Platten als Baumaterial für verschiedenste Zwecke, insbesondere als Isoliermaterial, kann dann eine Ausschäumung der Hohlräume zwischen den Stegen erfolgen. Die Ausschäumung der Hohlräume der Stegplatte erfolgt zweckmässigerweise gleichzeitig mit der Koextrusion der Verbundplatte.

Eine besondere Anwendung der vorliegenden Erfindung ist die Herstellung gekrümmter Formkörper aus derartigen Verbundplatten durch Verformung derselben in der Wärme. Auf der Verfestigungsschicht ist insbesondere eine weitere als Haftvermittler zu Textilmaterial dienende Schicht vorgesehen. Diese besteht günstigerweise aus einem Ethylen-Vinylacetat-Copolymer (EVA), welches beim Erwärmen weich wird und sich mit einem eventuell darauf vorgesehenen Textilmaterial verbindet. Aus derartigen Verbundplatten lassen sich bei entsprechendem Zuschnitt der Platten u.a. Möbelteile, wie Sesselsitzflächen oder -lehnen, auf einfache und rasche Art herstellen. In der Regel wird man zu diesem Zweck Verbundplatten wählen, bei denen die Hohlräume zwischen den Stegen der Stegplatten mit einem Polystyrol- oder Polyurethanschaum ausgeschäumt sind.

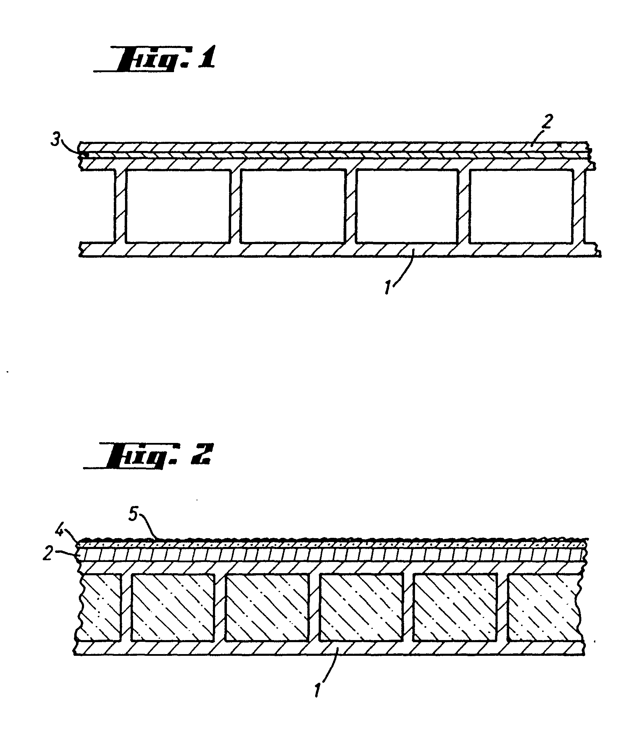

Der Aufbau der erfindungsgemässen Platte ist in der beiliegenden Zeichnung schematisch dargestellt, wobei in Fig. 1 ein Schnitt durch eine als Glashausabdeckung dienende Verbundplatte, in Fig. 2 ein Schnitt durch eine insbesondere in der Möbelindustrie verwendbare Platte dargestellt ist.

Gemäss Fig. 1 besteht die Stegplatte 1 aus zwei Platten, die durch Stege miteinander verbunden sind. Auf der einen Seite dieser Stegplatte ist eine Verfestigungsschicht 2 aufgebracht, wobei zwischen Stegplatte und Verfestigungsschicht die Ausgleichsschicht 3 vorgesehen ist. Mit dieser beschichteten Seite nach aussen kann die erfindungsgemässe Verbundplatte als Glashausabdeckung verwendet werden. Selbstverständlich können auch Mehrfachstegplatten eingesetzt werden, ebenso können auf beiden Seiten der Stegplatte Verfestigungsschichten vorgesehen werden.

In Fig. 2 ist auf einer Seite der Stegplatte 1 die Verfestigungsschicht 2 gezeigt, auf der ihrerseits die Haftvermittlerschicht 4 zu dem Textilmaterial 5 aufgebracht ist. Die Hohlräume 6 in der Stegplatte sind im vorliegenden Fall mit einem Kunststoffschaum ausgeschäumt.

## Patentansprüche

1. Verbundplatte, die eine Stegplatte aus Polycarbonat enthält, bei welcher mindestens zwei durchgehende Platten unter Bildung von Hohlräumen durch Stege miteinander verbunden sind, wobei auf mindestens einer ihrer beiden Seiten eine haftvermittelnde Ausgleichsschicht und auf dieser eine oberste Schichte aus einem vom Material der Stegplatte unterschiedlichen Kunststoff angeordnet ist, dadurch gekennzeichnet, dass die oberste Schichte (Verfestigungsschicht) (2) aus einem Kunststoff mit im Vergleich zur Stegplatte (1) grösserer Oberflächenhärte gebildet ist und eine UV-Stabilität aufweist.

2. Verbundplatte nach Anspruch 1, dadurch gekennzeichnet, dass die Hohlräume in der Stegplatte (1) mit einem Kunststoffschaum ausgeschäumt sind.

3. Verbundplatte nach Anspruch 1 oder 2, dadurch gekennzeichnet, dass die Verfestigungsschicht (2) aus einem Poly(meth)acrylat und die Ausgleichsschicht (3) aus Polyäthylen besteht.

## Claims

1. A composite panel which contains a webbed panel of polycarbonate and in which at least two continuous panels are connected to one another by webs so as to form cavities, there being arranged on at least one of their two faces an adhesive levelling layer and there being arranged on the latter an upper layer of a plastics material different from the material of the webbed panel, characterised in that the upper layer (reinforcing layer) (2) is formed from a plastics material having, in comparison with the webbed panel (1), greater surface hardness, and in that the upper layer is UV-resistant.

2. A composite panel according to Claim 1, characterised in that the cavities in the webbed panel (1) are foamed with a plastics foam.

3. A composite panel according to Claim 1 or 2, characterised in that the reinforcing layer (2) consists of a poly(meth)acrylate and the levelling layer (3) consists of polyethylene.

## Revendications

1. Plaque composite renfermant une plaque d'âme en polycarbonate, dans laquelle au moins deux plaques ininterrompues sont reliées l'une à l'autre par l'intermédiaire de nervures, en formant des cavités, une couche adhésive de compensation étant disposée sur au moins l'une de leurs deux faces et sur cette couche étant disposée une couche supérieure extrême en une matière plastique différant du matériau de la plaque d'âme, caractérisée par le fait que la couche supérieure extrême (couche de solidification) (2) est formée par une matière plastique présentant une plus grande dureté superficielle par comparaison avec la plaque d'âme (1), et possède une stabilité aux UV.

2. Plaque composite selon la revendication 1, caractérisée par le fait que les cavités situées dans la plaque d'âme (1) sont comblées, par moussage, d'une mousse de matière plastique.

3. Plaque composite selon la revendication 1 ou 2, caractérisée par le fait que la couche de solidification (2) consiste en un poly(méth)acrylate et la couche de compensation (3) consiste en du polyéthylène.

## Fig. 1

## Fig. 2